# NEUE EUROPÄISCHE PATENTSCHRIFT

(11) **EP 1 396 012 B2**
(45) Veröffentlichungstag und Bekanntmachung des Hinweises auf die Entscheidung über den Einspruch: **28.07.2010**
(45) Hinweis auf die Patenterteilung: 24.08.2005
(21) Anmeldenummer: 02732299.9
(22) Anmeldetag: 05.06.2002
(51) Int. Cl.: H01L 41/09

(54) **PIEZOELEKTRISCHER ANTRIEB**
PIEZOELECTRIC DRIVE
ENTRAINEMENT PIEZOELECTRIQUE

(30) Priorität: 06.06.2001 CH 103201
(43) Veröffentlichungstag der Anmeldung: 10.03.2004
(73) Patentinhaber: miniswys SA, 2503 Biel (CH)
(72) Erfinder: WITTEVEEN, Bonny, 5912 Venlo (NL)
(74) Vertreter: Frei, Alexandra Sarah
(86) Internationale Anmeldenummer: PCT/CH2002/000295
(87) Internationale Veröffentlichungsnummer: WO 2002/099844

(56) Entgegenhaltungen:
- EP-A- 1 075 079
- EP-B1- 0 552 346
- WO- -02//37535
- WO-A-01/41228
- DE-A1- 3 309 239
- DE-A1- 19 920 436
- DE-A1- 19 928 140
- DE-A1- 19 937 209
- JP- - 64 001 481
- US- - 3 368 085
- US- - 5 073 739
- US- - 5 153 478
- US- - 5 453 653
- US- - 5 828 157
- US- - 5 955 820
- US-A- 5 410 206
- US-A1- 2002 038 987
- US-B1- 6 201 339
- US-B1- 6 266 296
- US-B1- 6 323 578
- J. VAN RANDERAAT AND R.E. SETTERINGTON: ' Piezoelectric ceramics-1991' N.V. PHILIPS GLOEILAMPENFABRIEKEN Bd. APRIL, EINDHOVEN,
- HEIS VERLAG C'T MAGAZIN FÜR COMPUTERTECHNIK - 2001 Bd. 10, GERMANY, ISSN 5/7-20 Seite 66
- AUGUST PFLUGER: 'Motor mit wenig Verschleiss' TAGES-ANZEIGER VOM 02.02.2001 Seite 1
- AUGUST PFLUGER: 'Bonsai-Motor vor Durchbruch' BASLER ZEITUNG VOM 02.02.2001 Seite 1-2
- 'Auszeichnungen für Creaholic und HTA' BIELER TAGBLATT VOM 26.01.2001, RESSORT WIRTSCHAFT Seite 1-3
- 'Friction drive steps to smaller sizes' EUREKA MAGAZIN / JUNI 2001 Seite 1-5
- INDUSTRIEANZEIGER VOM 08.06.2001
- 'Der MINISWYS-Motor- die revolutionäre Antriebstechnologie' AUSZUG AUS DER HOMEPAGE DER MINISWYS AG VOM 05.04.01-12.04.01

## Beschreibung

Die Erfindung betrifft einen piezoelektrischen Antrieb nach dem Oberbegriff des ersten, unabhängigen Patentanspruchs.

Piezoelektrische Antriebe, das heisst Antriebe mittels piezokeramischer Materialien, die durch ein elektrisches Spannungsfeld mechanisch veränderbar sind, eignen sich insbesondere für miniaturisierte Anwendungen, beispielsweise für Motoren mit einem Volumen in der Grössenordnung von wenigen Kubikzentimetern oder gar mit einem Volumen, das kleiner ist als ein Kubikzentimeter. Weitere Vorteile dieser Antriebe sind ein hohes Moment bei kleinen Geschwindigkeiten, eine einfache Regelbarkeit, ein ruhiger Lauf, ein relativ einfacher Aufbau und Unempfindlichkeit gegenüber externen magnetischen Feldern sowie die Tatsache, dass sie selber keine magnetischen Felder erzeugen.

Piezoelektrische Antriebe vom sogenannten Stehende-Welle-Typus weisen als antreibendes Element mindestens einen Resonator auf, der üblicherweise aus einem Piezoelement und einem mechanisch an das Piezoelement gekoppelten Resonanzkörper (Horn) besteht, wobei das Piezoelement und der Resonanzkörper derart aufeinander abgestimmt sind und das Piezoelement derart angetrieben wird, dass der Resonator in einer stehenden Welle schwingt. Das Horn weist ein vom Piezoelement weg weisendes, sich verjüngendes freies Ende auf, das vorteilhafterweise auf einem Punkt grösster Schwingungsamplitude liegt. Es zeigt sich, dass solche Hornspitzen, wenn sie in geeigneter Weise gegen einen beweglichen Körper gedrückt werden, diesen gerichtet antreiben können, wobei die Kraftübertragung im wesentlichen auf einem Reibschluss beruht.

In "Piezoelectric Actuators and Ultrasonic motors" von Kenji Uchino (Kluwer Academic Publishers, Boston, Dordrecht, London, 1997) wird ein derartiger Antrieb beschrieben. Dieser weist ein Paar von koaxial übereinander angeordneten, scheibenförmigen Piezoelementen auf, die in entgegengesetzter Richtung polarisiert in einem 3,3-Modus betrieben werden. Ein Horn schliesst im wesentlichen ebenfalls koaxial an die Piezoelemente an. Die Hornspitze wird gegen die Oberfläche eines Körpers gepresst, der parallel zu dieser Oberfläche beweglich angeordnet ist. Es zeigt sich, dass der Körper sich mit Hilfe des Horns gerichtet antreiben lässt, wenn die Achse des Horns nicht genau senkrecht gegen die Oberfläche gerichtet wird sondern mit der Senkrechten auf die Oberfläche einen kleinen, spitzen Winkel bildet. Wenn der derart angeordnete Resonator mit einer Eigenfrequenz angetrieben wird, treibt er den Körper in diejenige Richtung, in die die leicht schiefe Hornspitze zeigt. Die induzierte, gerichtete Bewegung des angetriebenen Körpers wird mit elliptischen Schwingungen der Hornspitze in einer Ebene senkrecht zur Oberfläche des Körpers erklärt. Eine Umkehrung der Bewegungsrichtung wird durch eine Umorientierung der Resonatorachse erzielt.

In der Publikation DE-3920726 (Olympus Optical) wird ein ähnlicher Piezomotor beschrieben. Anstelle des relativ zu seiner Achse symmetrischen Resonators des oben kurz beschriebenen Motors weist der Motor gemäss DE-3920726 ein asymmetrisches Horn auf, dessen sich verjüngendes Ende nicht auf der Resonatorachse liegt. Der Resonator wird mit senkrecht auf die Oberfläche des anzutreibenden Körpers gerichteter Achse angeordnet und ergibt bei geeigneter Ausformung der Hornverjüngung gegen die Hornspitze ebenfalls eine durch eine elliptische Bewegung dieser Hornspitze erzeugte gerichtete Bewegung des Körpers. Dabei gibt es Schwingungszustände bei voneinander verschiedenen Frequenzen, die Bewegungen in entgegengesetzten Richtungen erzeugen. Die Bewegungsrichtung ist also über die die Piezoelemente antreibende Frequenz einstellbar. Der Antrieb wird zur Anwendung als Linearantrieb oder als Rotationsantrieb vorgeschlagen, wobei die Resonatorachse senkrecht auf eine Stirnfläche des Rotors (axial) oder senkrecht auf die Mantelfläche des Rotors (radial) ausgerichtet wird.

Der piezoelektrische Antrieb gemäss DE-3920726 lässt sich als Rotationsmotor mit stirnseitigem Antrieb mit relativ einfachen Mitteln realisieren. In der Ausführungsform mit dem stirnseitigen Antrieb ist es auch mit einfachen Mitteln möglich, Rotor und Resonator gegeneinander vorzuspannen. Insbesondere für diese Ausführungsformen mit axial ausgerichteter Resonatorachse sind aber einer Miniaturisierung Grenzen gesetzt, die man gerne unterschreiten möchte.

Für Motoren, die insbesondere in axialer Richtung sehr flach sein sollen, wird deshalb vorgeschlagen (z.B. EP-0505848, ETA SA) ein zentral angeordnetes, kreisscheibenförmiges Piezoelement anzuwenden, das in einem planaren Modus antreibbar ist. Dieses Piezoelement ist an einen flachen, mit dem Piezoelement koaxial angeordneten Resonanzkörper gekoppelt, der eine Mehrzahl von sich radial gegen einen Aussenring erstreckenden asymmetrischen Hornspitzen aufweist. Durch das Piezoelement angetrieben schwingen die Hornspitzen wiederum in elliptischen Bewegungen, durch die der Aussenring gerichtet um den Resonator rotierend bewegt wird. Der beschriebene Antrieb kann zwar in axialer Richtung sehr dünn ausgestaltet werden, ist aber immer ein Aussenläufer. Eine Vorspannung zwischen Resonanzkörper und Aussenring ist nicht möglich, so dass der Antrieb auf Abrieb an den Hornspitzen sehr empfindlich reagiert und die durch Reibung übertragbare Kraft beschränkt bleibt.

Die Patentschrift US 6,201,339 beschreibt einen miniaturisierten piezoelektrischen Antrieb, der einen flachen Vibratorkörper mit Zentralbereich und mehreren L-, T- oder π-förmigen Resonatorarmen aufweist. Die Resonatorarme, auf denen je ein piezoelektrisches Element befestigt ist, können dabei gegen einen Kontaktbereich hin verjüngt sein und treiben einen Rotor an, welcher mittels einer Feder axial gegen den Vibratorkörper gepresst wird.

Weiters wird in EP 1 075 079 ein im wesentlichen planarer piezoelektrischer Vibrationsantrieb mit einem Resonator offenbart, der ein Hornelement beinhalten kann und der mittels eines elastischen Halteelements schräg gegen einen beweglichen Körper gepresst wird und diesen antreibt. Das Halteelement, welches mit einer Schraube auf einer Hauptplatine befestigt ist, wirkt als Federelement.

WO 99/07063 zeigt einen piezoelektrischen Antrieb mit einem an ein Piezoelement mechanisch angekoppelten und durch das Piezoelement in einer stehenden Welle erregbaren Resonator mit zwei sich verjüngenden Hörnern. Mit einem Kontakt-Kantenbereich der Hörner ist ein zweiter Körper in einer Ebene des Resonators antreibbar.

WO 01/41228, nach dem Prioritätstag der vorliegenden Schrift veröffentlicht, zeigt einen piezoelektrischen Antrieb mit einem Resonator, welcher mit einem Piezoelement in einer stehenden Welle erregbar ist. Der Resonator ist durch eine zusätzliche Haltevorrichtung an einen angetriebenen zweiten Körper pressbar. Eine andere Ausführungsform zeigt parallel angeordnete, flache Antriebsbleche ohne Ruhebereich, zwischen welchen Piezoelemente angeordnet sind. Die Antriebsbleche treiben einen senkrecht zur Ebene der Antriebsbleche beweglichen zweiten Körper an.

Die Erfindung stellt sich nun die Aufgabe, einen piezoelektrischen Antrieb zu schaffen, der mit einfachsten Mitteln realisierbar ist, insbesondere auch dann, wenn seine axiale Ausdehnung (bzw. allgemein: seine Ausdehnung senkrecht zur Ebene einer zu erzeugenden Bewegung) im Bereiche eines Millimeters oder weniger sein soll. Der erfindungsgemässe, piezoelektrische Antrieb soll als Linearantrieb oder als Rotationsantrieb, insbesondere als Innenläufer anwendbar sein.

Diese Aufgabe wird gelöst durch den piezoelektrischen Antrieb, wie er durch die Patentansprüche definiert wird.

Der erfindungsgemässe, piezoelektrische Antrieb dient zur Erzeugung einer gerichtesten, relativen Bewegung zwischen zwei Körpern. Er weist mindestens zwei dekkungsgleiche und deckungsgleich angeordnete flache Antriebsbleche auf, welche den einen der zwei Körper bilden oder mit diesem fest verbunden sind und welche sich jeweils völlig flach in einer Ebene erstrecken, die zur Ebene der zu erzeugenden Bewegung parallel ist (für eine rotative Bewegung sind die Antriebsblech senkrecht zur Rotationsachse ausgerichtet). Die Antriebsbleche bilden jeweils einen Ruhebereich, an dem mindestens ein Resonatorbereich angeformt ist, wobei zwischen Ruhebereich und Resonatorbereich ein schmaler, in Richtung der flächigen Ausdehnung des Antriebsbleches federnder Federbereich liegt, der einen integralen Bestandteil des Antriebsbleches darstellt. Es liegt mindestens ein flaches Piezoelement vor, wobei auf beiden Seiten des Piezoelementes oder der Piezoelemente je ein Resonatorbereich eines Antriebsbleches angekoppelt ist.

Am Resonatorbereich der Antriebsbleche ist jeweils mindestens auf der einen Seite des Antriebsbleches ein dünnes, rechteckiges, vorzugsweise in einem 3,1-Modus betreibbares, sich parallel zum Antriebsblech erstreckendes Piezoelement angekoppelt, vorteilhafterweise aufgeklebt. Das Piezoelement hat eine Länge, die grösser ist als seine Breite, wobei seine Länge und seine Breite bedeutend grösser sind als seine Dicke. Die beiden sich quer zur Dicke erstreckenden Oberflächen des Piezoelementes sind als Kontaktflächen ausgerüstet. Die Längsachse oder die Querachse des Piezoelementes liegt im wesentlichen auf einer Achse des Resonatorbereichs. In Richtung mindestens der einen dieser Achsen überragt der Resonatorbereich das Piezoelement mindestens auf einer Seite, wo er ein sich zur Achse asymmetrisch verjüngendes Horn oder Doppelhorn bildet. Piezoelement und Resonatorbereich sind derart aufeinander abgestimmt, dass sie zusammen einen Resonator bilden, der durch Polarisierung des Piezoelementes mit einer hochfrequenten Wechselspannung in einen in einer stehenden Welle schwingenden Zustand bringbar ist.

Die mit Hilfe des erfindungsgemässen, piezoelektrischen Antriebs relativ zueinander zu bewegenden zwei Körper, von denen der erste die mindestens zwei Antriebsbleche ist oder mit dem Ruhebereich der Antriebsbleche fest verbunden ist, sind derart angeordnet, dass das Horn oder Doppelhorn des Resonatorbereichs mit einer im wesentlichen quer zum Antriebsblech ausgerichteten Oberfläche des zweiten Körpers in Kontakt steht und zwar so, dass der leicht vorgespannte Federbereich den Resonatorbereich gegen den zweiten Körper presst, und vorteilhafterweise so, dass die Längsachsen von Piezoelement und Resonatorbereich im wesentlichen parallel oder tangential zur zu erzeugenden Bewegung ausgerichtet sind. Der mit dem zweiten (anzutreibenden) Körper in Berührung stehende Kantenbereich eines Antriebsbleches befindet sich unmittelbar bei der Hornspitze oder zwischen den Spitzen eines Doppelhomes und ist vorteilhafterweise im wesentlichen parallel zu den Längsachsen von Piezoelement und Resonatorbereich ausgerichtet.

Neben der Funktion der Erzeugung einer Vorspannung zwischen den beiden relativ zueinander zu bewegenden Körpern hat der Federbereich eines Antriebsbleches auch die Aufgabe, die durch das angetriebene Piezoelement erzeugte Vibration vom Ruhebereich des Antriebsbleches zu entkoppeln.

Es zeigt sich, dass die Hornspitze eines derart flachen Resonatorbereichs unter Anregung durch das Piezoelement in einer Resonanzfrequenz elliptische Bewegungen in der Ebene eines Antriebsbleches ausführt, aus der sich die gerichtete relative Bewegung zwischen den beiden Körpern ergibt. Es zeigt sich auch, dass es Resonanzzustände gibt mit einer ersten Bewegungsrichtung und andere Resonanzzustände mit einer zweiten, der ersten entgegengesetzten Bewegungsrichtung.

Die elliptischen Bewegungen der Hornspitze können als Überlagerung der Longitudinalschwingung in Richtung der Längsachsen von Piezoelement und Resonatorbereich mit Transversalschwingungen in Richtung der Breite des Piezoelementes verstanden werden, wobei sich die Transversalschwingungen als Biegeschwingungen in das Horn fortpflanzen. Andererseits ist auch durch eine asymmetrische Ausgestaltung des Hornes eine gerichtete Biegeschwingung zu erwarten.

Es zeigt sich, dass eine Anordnung, in der die Longitudinalschwingung im wesentlichen parallel verläuft zur Bewegungsrichtung bzw. parallel oder tangential zur zu bewegenden Oberfläche, gegenüber der im wesentlichen senkrechten Anordnung gemäss Stand der Technik ruhiger und mit besserem Wirkungsgrad läuft, was mit schwächeren Schlägen senkrecht auf die anzutreibende Oberfläche erklärt werden kann.

Schwingungen des Piezoelementes in der Richtung seiner Dicke wirken sich insbesondere dann, wenn beidseitig vom Resonatorbereich je ein gleiches Piezoelement angekoppelt ist und die beiden Piezoelemente einander entgegengesetzt polarisiert werden, kaum auf den Resonatorbereich aus, so dass keine Energie verloren geht durch Reibung bei Bewegungen der Hornspitze quer zur Bewegungsrichtung.

Der erfindungsgemässe Antrieb kann sowohl als Antrieb für eine lineare Bewegung als auch für eine rotative Bewegung angewendet werden. Vorteilhafterweise sind an einem Antriebsblech eine Mehrzahl von parallel betriebenen Resonatorbereichen mit je einem Piezoelement oder mit je einer Mehrzahl von Piezoelementen angeformt. Für die Erzeugung einer rotativen Bewegung sind die Antriebsbleche quer zur Rotationsachse angeordnet und ihr Ruhebereich hat beispielsweise die Form eines Ringes, an dem gegen innen (Innenläufer) oder gegen aussen (Aussenläufer) die Resonatorbereiche in regelmässigen Abständen angeformt sind. Für den Antrieb einer linearen Bewegung erstreckt sich der Ruhebereich der Antriebsbleche mit einer Mehrzahl von Resonatorbereichen im wesentlichen in der Richtung der Bewegung.

Für die elektrische Polarisierung aller auf einem Antriebsblech angeordneten Piezoelemente kann das Antriebsblech als der eine der beiden elektrischen Anschlüsse ausgenützt werden, wenn das Antriebsblech aus einem elektrisch leitenden Material besteht und die Piezoelemente mit einem elektrisch leitenden Kleber darauf montiert sind. Eine sehr einfache Speisung ergibt sich, wenn zwei identische Antriebsbleche verwendet werden und die Piezoelemente dazwischen angeordnet und über die beiden Antriebsbleche gespeist werden. Alle Piezoelemente können bei einer derartigen Ausführungsform mit nur zwei elektrischen Anschlüssen an die beiden elektrisch leitenden Antriebsbleche gespeist werden, was insbesondere für Kleinstausführungen des piezoelektrischen Antriebs ein Vorteil ist. Um bei einer Ausführungsform mit zwei Antriebsblechen Schwingungen der Hornspitzen in Richtung der Dicke des Antriebsbleches zu verhindern und/oder für den Antrieb auszunützen, ist es vorteilhaft, die Hornspitzen jedes Resonatorbereichs der beiden Antriebsbleche über einen elektrisch isolierenden Distanzhalter miteinander zu verbinden oder im zweiten, anzutreibenden Körper eine Nut vorzusehen, in der die Hornspitzen eingreifen. Der genannte Distanzhalter kann auch die Funktion des Reibpartners mit dem anzutreibenden Körper übernehmen.

Vorteilhafterweise bestehen die Antriebsbleche aus einem gut wärmeleitenden Material und sind gross genug, um die bei der Vibration in den Piezoelementen entstehende Wärme abzuführen.

Das Material der Antriebsbleche und ihre Dicke sind derart an das Piezoelement anzupassen, dass die Federeigenschaften von Piezoelement und Resonatorbereich möglichst gut aufeinander abgestimmt sind. Bei gleicher Breite von Piezoelement und Resonatorbereich ist die Dicke der Antriebsbleche so zu wählen, dass das Produkt aus Dicke und Elastizitätsmodul für Piezoelement und Resonatorbereich gleich gross ist

Das Material der Antriebsbleche sollte ferner so wenig wie möglich dämpfend wirken und eine genügende mechanische Festigkeit aufweisen. Da die Kraft des erfindungsgemässen Antriebs über Reibung auf den zu bewegenden Körper übertragen wird, ist die Materialpaarung zwischen zu bewegendem Körper und Antriebsblech entsprechend zu wählen. Gegebenenfalls kann der Kantenbereich des Resonatorbereichs, der mit dem anzutreibenden Körper in reibendem Kontakt steht, aus einem für die Kraftübertragung durch Reibung geeigneteren Material bestehen als der Rest des Antriebsbleches oder kann zwischen zwei Antriebsblechen ein Distanzhalter aus einem derartigen Material die Reibfunktion übernehmen.

Es zeigt sich, dass Phosphorbronze sich beispielsweise gut als Material für die Antriebsbleche eignet. Phosphorbronze hat ein Elastizitätsmodul, das etwa doppelt so gross ist wie das Elastizitätsmodul von handelsüblichen Piezoelementen. Mit einem Piezoelement mit einer Dicke von 0,5 mm kann also ein Resonatorbereich aus einem 0,25 mm dicken Phosphorbronze-Blech oder zwei, beidseitig vom Piezoelement angeordnete derartige Resonatorbereiche mit je einer Dicke von je 0,125 mm angetrieben werden. Oder mit zwei beidseitig angeordneten derartigen Piezoelementen kann ein 0,5 mm dicker Resonatorbereich angetreiben werden.

Die Erfindung betrifft also einen piezoelektrischen Antrieb zur Erzeugung einer Relativbewegung in einer Bewegungsebene zwischen einem ersten Körper und einem zweiten Körper. Dieser Antrieb weist mindestens ein mit einer hochfrequenten Wechselspannung antreibbares Piezoelement und einen an dieses mechanisch angekoppelten und durch das Piezoelement in einer stehenden Welle erregbaren Resonator mit einem Horn oder Doppelhorn auf. Der Resonator ist mit dem ersten Körper wirkverbunden. Ein Bereich des Horns oder Doppelhorns ist zum gerichteten Antreiben gegen eine Oberfläche des zweiten Körpers pressbar.

Der Antrieb weist mindestens zwei Antriebsbleche auf, die den ersten Körper bilden oder an diesem befestigt sindt und im wesentlichen parallel zur Bewegungsebene angeordnet sind. Die Antriebsbleche weisen jeweils einen Ruhebereich und mindestens einen Resonatorbereich auf, wobei zwischen Ruhebereich und Resonatorbereich ein im wesentlichen parallel zur Ebene des Antriebsbleches federnder Federbereich (integraler Teil des Antriebsbleches) angeordnet ist. An den mindestens einen Resonatorbereich ist seitlich ein Piezoelement angekoppelt. Der zweite Körper ist relativ zum den Antriebsblechen derart positionierbar, dass der mindestens eine Resonatorbereich mit einem Kantenbereich, der am Horn oder Doppelhorn liegt, durch eine Vorspannung des Federbereiches in einem Kontaktbereich gegen eine im wesentlichen quer zur Ebene der Antriebsbleche ausgerichtete Oberfläche des zweiten Körpers gepresst wird, so, dass dieser im wesentlichen parallel zu dieser Oberfläche antreibbar ist.

Beispielhafte Ausführungsformen des erfindungsgemässen Piezoantriebs werden im Zusammenhang mit den folgenden Figuren mehr im Detail beschrieben. Dabei zeigen:
- **Figur 1**: einen schematisch dargestellten nicht erfindungsgemäßen Linearantrieb mit einem Antriebsblech, das einen Ruhebereich und zwei Resonatorbereiche aufweist (Blickrichtung senkrecht auf das Antriebsblech);
- **Figuren 2a bis 2f**: Schnitte durch Beispiele von Resonatoren mit schematisch dargestellter Kontaktierung des Piezoelementes oder der Piezoelemente;
- **Figuren 3a und 3b**: Schnitte durch beispielhafte Kontaktbereiche von Resonatoren gemäss Figur 2d mit einem anzutreibenden Körper;
- **Figuren 4 und 5**: beispielhafte Ausführungsformen eines erfindungsgemässen Rotationsantriebes (Figur 3: Innenläufer; Figur 4: Aussenläufer);
- **Figur 6**: eine weitere Ausführungsform eines Resonatorbereichs eines Antriebsbleches;
- **Figur 7**: eine weitere Ausführungsform eines erfindungsgemässen Antriebs mit einem Resonator mit Doppelhorn;
- **Figuren 8 und 9**: zwei beispielhafte Motoren, die je mehr als einen Antrieb gemäss Figur 6 aufweisen.
- **Figur 10**: eine schematische Betriebskurve eines erfindungsgemässen Antriebs.

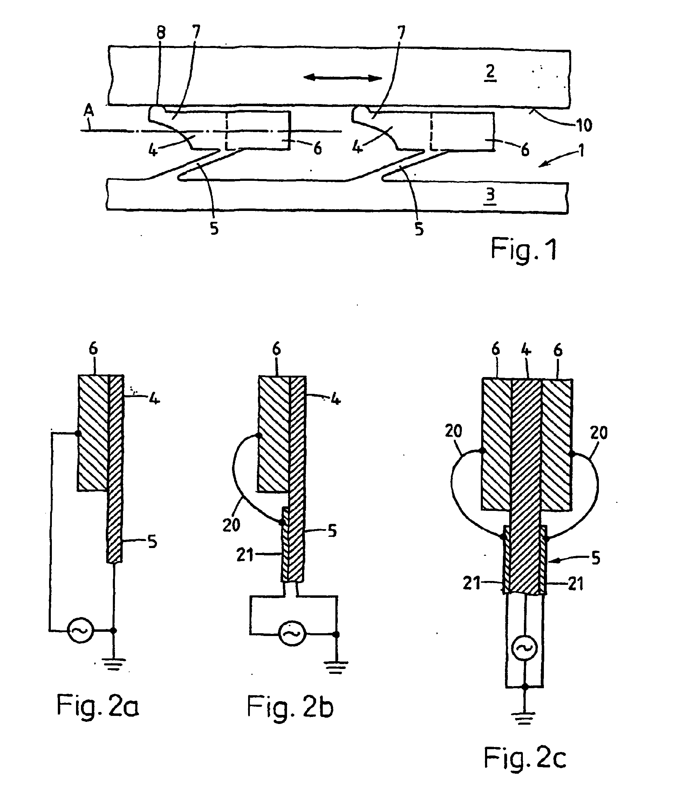

**Figur 1** zeigt eine beispielhafte Ausführungsform eines nicht erfindungsgemässen, piezoelektrischen Antriebs, der als Linearantrieb ausgestaltet ist (Blickwinkel senkrecht zur Bewegungsrichtung und senkrecht auf das Antriebsblech). Die Figur zeigt ein Antriebsblech 1, das einen ersten Körper darstellt oder an einem solchen befestigt ist, und einen zweiten Körper 2, der durch den Antrieb relativ zum ersten Körper 1 in der einen oder anderen Pfeilrichtung zu bewegen ist. Das Antriebsblech 1 weist einen Ruhebereich 3 und zwei Resonatorbereiche 4 auf, wobei die Resonatorbereiche 4 über je einen Federbereich 5 an den Ruhebereich 3 anschliessen.

Am Resonatorbereich 4 sind je ein (gegebenenfalls zwei) rechteckige, flache Piezoelemente 6 aufgeklebt, wobei die Längsachsen von Resonatorbereich und Piezoelement übereinanderliegen (Längsachse A). Der Resonatorbereich 4 hat etwa dieselbe Breite wie das Piezoelement 6 (Ausdehnung quer zur Längsachse A) und überragt das Piezoelement 6 in Richtung der Längsachse A auf einer Seite, wo er ein sich asymmetrisch zur Längsachse verjüngendes Horn 7 bildet.

Die Resonatorbereiche 4 sind derart angeordnet, dass die Längsachsen A im wesentlichen parallel zur Bewegungsrichtung (Doppelpfeil) ausgerichtet sind und dass ein Kontakt-Kantenbereich 8 unmittelbar bei der Spitze des Horns 7 gegen eine im wesentlichen senkrecht zum Antriebsblech 1 ausgerichtete Oberfläche 10 des zweiten Körpers 2 gepresst wird. Die Presskraft wird durch eine elastische Deformation des Federbereiches 5 in der Ebene des Antriebsbleches 1 erzeugt.

Der Federbereich 5 ist als schmaler Streifen ausgestaltet, dessen Ausrichtung eine Komponente parallel zu den Längsachsen A und eine Komponente senkrecht dazu aufweist. Er mündet vorteilhafterweise an einer Stelle in den Resonatorbereich, an der sich für die Frequenzen, mit denen der Antrieb betrieben werden soll, ein Wellenknoten befindet.

Es zeigt sich, dass Resonatoren, wie sie in der Figur 1 dargestellt sind, mit Antriebsblechdicken und Piezodicken unter 1 mm und flächigen Ausdehnungen von unter einem cm² für die Anwendung brauchbare Eigenfrequenzen zwischen etwa 20 und 1000 kHz aufweisen und dass bei verschiedenen Frequenzen einander entgegengesetzte Bewegungsrichtungen auftreten.

Figuren 2a - 2c zeigen Querschnitte durch einen Resonator, welche das verständnis der Erfindung erleichtern.

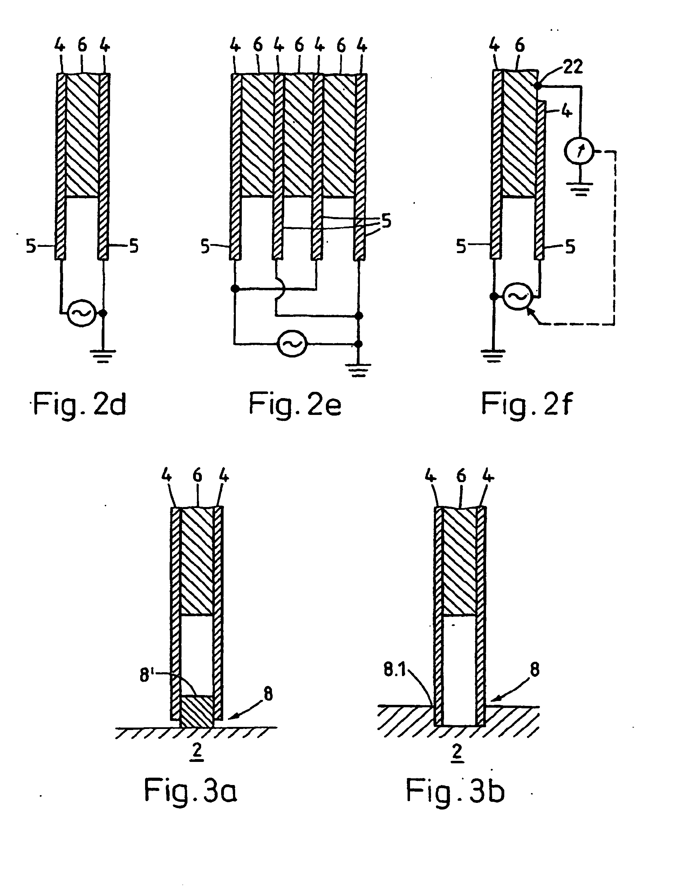

Figuren 2d bis 2f zeigen beispielhafte Querschnitte (senkrecht zur Längsachse) durch einen Resonator (Piezoelement 6 sowie Resonatorbereich 4 und einen Teil des Federbereiches 5 des Antriebsbleches) des erfindungsgemässen, piezoelektrischen Antriebs, sowie, sehr schematisch einige Möglichkeiten zur Kontaktierung des Piezoelementes 6 oder der Piezoelemente 6.

Figuren 2a und 2b zeigen einen Resonator mit auf der einen Seite des Resonatorbereichs 4 angekoppeltem Piezoelement 6. Das Piezoelement ist auf der einen Seite über den Resonatorbereich 4 kontaktiert, an den es beispielsweise mit einem elektrisch leitenden Kleber aufgeklebt ist. Der Federbereich 5 dient dabei als Leiterbahn, die das Piezoelement mit einer Stromquelle oder mit Erde verbindet. Die andere Seite des Piezoelementes 6 ist beispielsweise über einen Bonddraht 20 oder eine Bondfolie kontaktiert, wobei der Bonddraht 20 vorteilhafterweise an einer Stelle mit der Kontaktfläche des Piezoelementes verbunden ist, die im Betrieb einen Knotenpunkt der stehenden Welle darstellt. Der Bonddraht 20 ist über beliebige weitere Leiter (Figur 2a) mit der Stromquelle oder mit Erde verbunden, z.B. wie in Figur 2b dargestellt über eine auf dem Federbereich 5 verlaufende Leiterbahn 21, die beispielsweise als auf dem Antriebsblech isolierend aufgeklebter Flexprint ausgestaltet ist.

Figur 2c zeigt eine Ausführungsform mit zwei Piezoelementen 6, die einander gegenüberliegend am Resonatorbereich 4 angekoppelt sind. Die Kontaktierung erfolgt beispielsweise einerseits über Federbereich 5 und Resonatorbereich 4 und andererseits über beidseitig am Federbereich 5 aufliegende Leiterbahnen 21 und Bonddrähte 20, wie dies für die Figur 2b oben beschrieben ist.

Figuren 2d und 2e zeigen Resonatoren mit einer Mehrzahl von im wesentlichen deckungsgleich angeordneten Resonatorbereichen 4 verschiedener, ebenfalls deckungsgleicher Antriebsbleche. Dabei ist jeweils ein Piezoelement 6 zwischen zwei Resonatorbereichen 4 angeordnet. Die Kontaktierung jedes Piezoelementes 6 erfolgt vorteilhafterweise über die je an das Piezoelement angekoppelten Resonatorbereiche 4. Ausführungsformen von Resonatoren mit mehreren einander deckend angeordneten Resonatorbereichen 4 bzw. mehreren Antriebsblechen, in denen Piezoelemente 6 zwischen Resonatorbereichen 4 angeordnet sind, haben den Vorteil einer erhöhten Stabilität senkrecht zu den Antriebsblechen und erlauben eine einfache Kontaktierung der Piezoelemente 6 über die Antriebsbleche, die vorteilhafterweise ganz aus einem elektrisch leitfähigen Material bestehen und über die mit nur je einem einzigen Anschluss an den Ruhebereich des Antriebsbleches auch eine Mehrzahl von Piezoelementen verschiedener Resonatoren kontaktierbar sind.

Figur 2f zeigt einen Resonator wie Figur 2d, der zwei Resonatorbereiche 4 und ein zwischen den Resonatorbereichen 4 angeordnetes Piezoelement 6 aufweist. Das Piezoelement 6 ist für seine Verbindung mit Stromquelle und Erde über die beiden Federbereiche 5 und Resonatorbereiche 4 kontaktiert. An der nicht an Erde anliegenden Seite des Piezoelementes wird ferner eine Spannung abgegriffen (Messanschluss 22), die als Messglied einer Regulierung für Speisespannung und/oder Speisefrequnez dienen kann. Dabei ist der Messanschluss 22 von der Speisung elektrisch zu isolieren, das heisst, die Kontaktschicht des Piezoelementes 6 ist rund um den Messanschluss zu unterbrechen.

**Figuren 3a und 3b** zeigen Schnitte durch Kontakt-Kantenbereiche 8 von Resonatoren gemäss Figur 2d, die zwei im wesentlichen deckungsgleich angeordnete Resonatorbereiche 4 bzw. Antriebsbleche und ein dazwischen angeordnetes Piezoelement 6 aufweisen. Der Kontakt-Kantenbereich 8 ist derjenige Kantenbereich des Resonatorbereichs 4 eines Antriebsbleches, der mit dem anzutreibenden Körper 2 in direktem oder indirektem Kontakt steht.

Figur 3a zeigt einen Kontakt-Kantenbereich 8, in dem zwischen den Resonatorbereichen 4 ein Distanzelement 8'angeordnet ist, derart, dass nicht die Kanten der Resonatorbereiche direkt sondern das Distanzelement 8' mit dem anzutreibenden Körper 2 in Berührung steht. Das Distanzelement 8' ist für eine genügende Reibung am anzutreibenden Körper und für eine elektrische Isolation der beiden Resonatorbereiche 4 voneinenader auszurüsten. Durch das Distanzelement 8' werden Schwingungen der Resonatorbereiche 4 quer zum Antriebsblech und damit verbundene Reibung ohne Antriebsnutzen weitgehend verhindert.

Für Resonatoren mit mehr als zwei deckungsgleichen Resonatorbereichen und dazwischen angeordneten Piezoelementen (Fig. 2e) werden vorteilhafterweise je zwischen zwei benachbarten Resonatorbereichen Distanzelemente angeordnet.

Figur 3b zeigt in derselben Darstellungsweise wie Figur 3a einen Schnitt durch einen Kontakt-Kantenbereich 8 eines Resonators mit zwei deckungsgleichen Resonatorbereichen 4, in der die Resonatorbereiche 4 in eine Nut 8.1 des anzutreibenden Körpers eingreifen und gegen den Nutgrund gepresst sind. Die Nutwände sind derart dimensioniert, dass sie die Resonatorbereiche 4 im Ruhezustand berühren. Es zeigt sich, dass in einer derartigen Ausführungsform mehr Kraft übertragbar ist als mit Ausführungsformen ohne Nut. Dies ist offenbar darauf zurückzuführen, dass auch die quer zu den Resonatorbereichen 4 gerichteten Schwingungen gerichtet sind und für den Antrieb ausgenützt werden können.

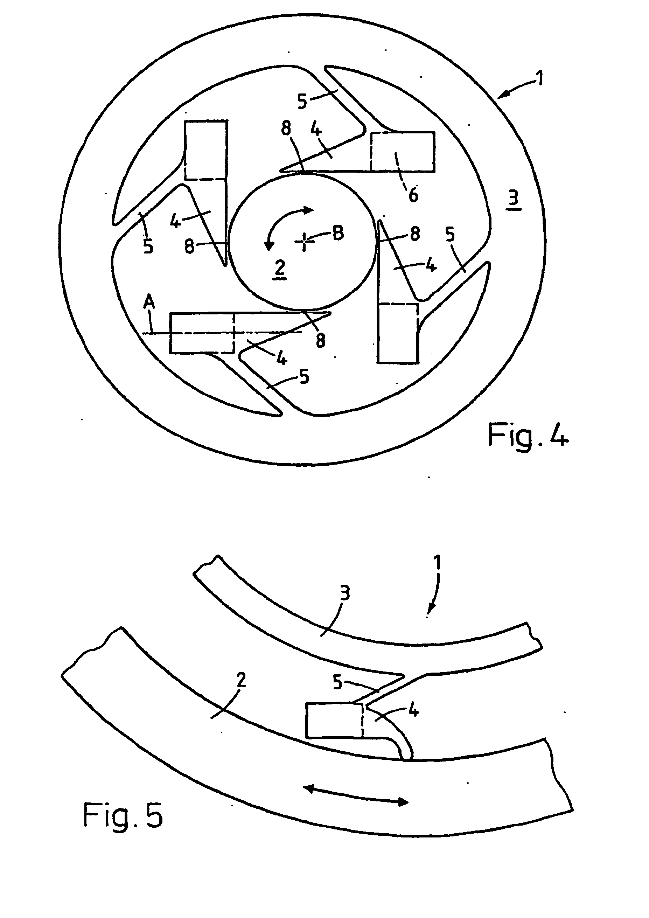

**Figur 4** zeigt eine weitere, beispielhafte Ausführungsform des erfindungsgemässen, piezoelektrischen Antriebs, der als Rotationsantrieb und zwar als Innenläufer ausgestaltet ist. Ein Antriebsblech 1 einer Mehrzahl von im wesentlichen deckungsgleichen Antriebsblechen, das mit geeigneten Mitteln an einem Stator befestigt ist, weist einen ringförmigen Ruhebereich 3 auf und vier gegen das Innere des Ringes gerichtete Resonatorbereiche 4, die über Federbereiche 5 an den Ruhebereich 3 angeformt sind. Das Antriebsblech 1 ist senkrecht zur Rotationsachse B eines Rotors (zweiter Körper 2) angeordnet. Die Resonatorbereiche 4 sind im wesentlichen dieselben wie die in der Figur 1 dargestellten. Sie weisen je eine gegen den Rotor gerichtete, im wesentlichen geradlinige Kante auf, von der ein Teil im Bereich der Hornspitze (Kontakt-Kantenbereich 8) mit dem Rotor (gegebenenfalls über ein Distanzelement) in Kontakt steht. Die Federbereiche 5 sind beispielsweise wiederum schmale, gerade Streifen, die in einer Richtung mit einer tangentialen und einer radialen Komponente ausgerichtet sind.

Der Rotor 2 wird durch die Resonatorbereiche 4 des Antriebsbleches 1 nicht nur angetrieben sondern auch in seiner radialen Position gehalten. Für bestimmte Anwendungen wird sich also eine zusätzliche, radiale Achslagerung erübrigen.

**Figur 5** zeigt, dass der erfindungsgemässe, piezoelektrische Antrieb auch als Aussenläufer einsetzbar ist, der aber radial grössere Abmessungen aufweist als der Innenläufer der Figur 3. Der dargestellte Antrieb unterscheidet sich nicht prinzipiell von den in den Figuren 1 und 3 dargestellten Antrieben. Gleiche Teile sind mit gleichen Bezugsziffem bezeichnet.

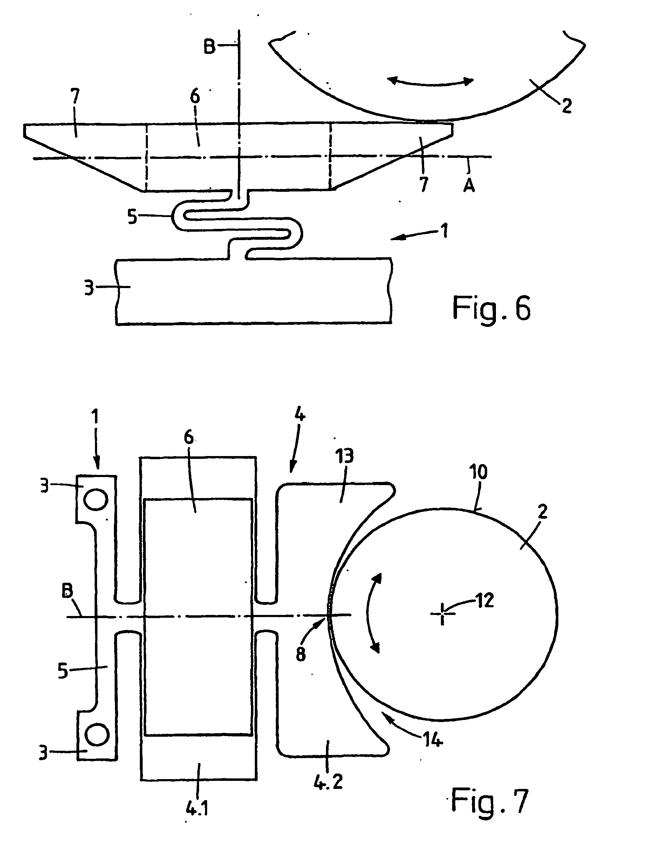

**Figur 6** zeigt eine weitere Ausführungsform von Federbereich 5 und Resonatorbereich 4 eines Antriebsbleches 1 (oder einer Mehrzahl von deckungsgleich angeordneten Antriebsblechen). Diese unterscheiden sich von den Ausführungsformen der vorhergehenden Figuren durch eine das Piezoelement 6 beidseitig gleich überragende Form (zwei Hörner 7) und durch die Form des Federbereiches 5.

Die beidseitige Überragung des Piezoelementes 6 gibt dem Resonatorbereich 4 eine relativ zur Querachse B symmetrische Form, derart, dass stehende Longitudinalwellen mit einer ungeraden Anzahl von Wellenknoten einen genau mittigen Wellenknoten aufweisen. Auf diesen Wellenknoten ist die mittige Mündung des Federbereiches 5 in den Resonatorbereich 4 ausgerichtet.

Der Federbereich 5, der wiederum als schmaler Streifen des Antriebsbleches ausgebildet ist, hat zwei Kurven und dazwischen einen Bereich, der im wesentlichen parallel zur Längsachse A ausgerichtet ist.

**Figur 7** zeigt schematisch und stark vereinfacht eine weitere, beispielhafte Ausführungsform eines erfindungsgemässen, piezoelektrischen Antriebs, der als Antrieb für einen um eine Drehachse 12 rotierend gelagerten Rotor 2 ausgestaltet ist (Blickwinkel senkrecht zur Bewegungsrichtung und senkrecht auf das Antriebsblech in Richtung der Achse 12). Die Figur zeigt ein Antriebsblech 1, das einen ersten Körper darstellt oder an einem solchen befestigt ist, und einen zweiten Körper 2 (Rotor), der durch den Antrieb relativ zum ersten Körper 1 in der einen oder anderen Pfeilrichtung zu bewegen ist. Das Antriebsblech 1 weist hier Ruhebereiche 3 und einen Resonatorbereich 4 auf, welcher Resonatorbereich 4 einen Hauptresonatorbereich 4.1 und einen sekundären Resonatorbereich 4.2 bildet, die miteinander über eine Einschnürung funktional verbunden sind. Der sekundäre Resonatorbereich 4.2 ist als zur Querachse B asymmetrisches Doppelhorn 13 ausgebildet. Der Kontakt-Kantenbereich 8 liegt in der Mulde 13 zwischen den Hörnern. Eine symmetrische Ausgestaltungen des Doppelhornes 13 ist bei einer entsprechenden, z.B. asymmetrischen Anordnung des anzutreibenden Körpers 2 möglich.

Ausgestaltungen mit mehreren wirkverbundenen Haupt- und Sekundärresonatorbereichen sind möglich.

Der Federbereich 5 ist als schmaler Streifen ausgestaltet, dessen Ausrichtung eine Komponente quer zur Querachse B aufweist. Er mündet vorteilhafterweise an einer Stelle in den Resonatorbereich 4, an der sich für die Frequenzen, mit denen der Antrieb betrieben werden soll, ein Wellenknoten befindet.

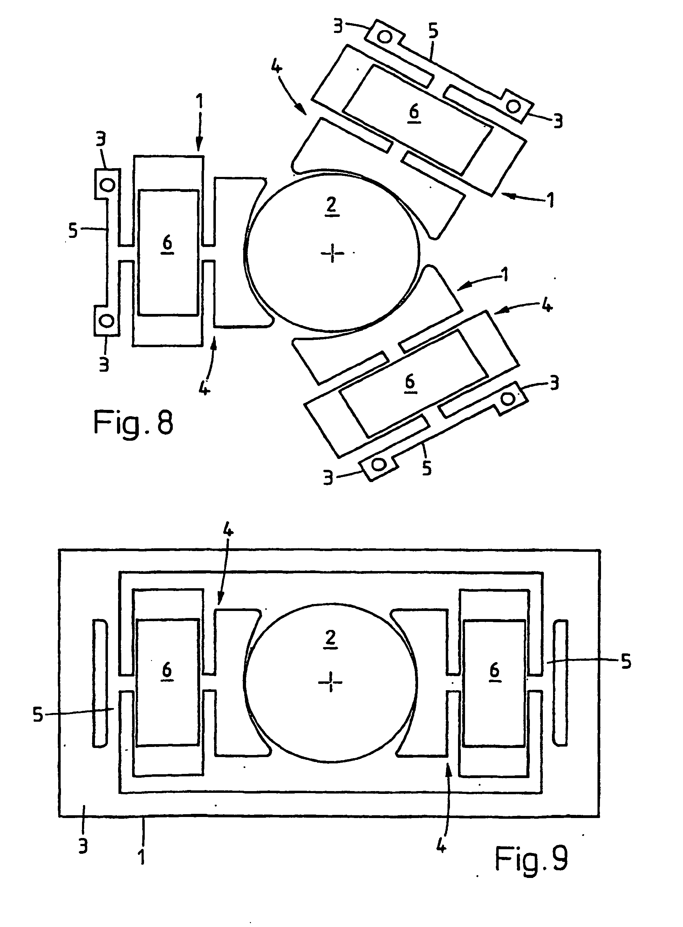

**Figur 8** zeigt einen Motor, der im wesentlichen aus drei Antrieben gemäss Figur 7 besteht. Das Antriebsblech 1 oder die Antriebsbleche dieser Antriebe sind zentrisch, in einer Ebene, um einen anzutreibenden Körper 2 angeordnet, derart, dass dieser nicht zwingend einer zusätzlichen externen Lagerung bedarf. Die drei dargestellten Antriebsbleche 1 können auch zu einem einzigen Antriebsblech mit drei Resonatorbereichen 4 vereint sein.

**Figur 9** zeigt schematisch und stark vereinfacht einen Antrieb mit einem einfachen, flachen Aufbau. Das Antriebsblech 1 oder die Antriebsbleche weisen je zwei Resonatorbereiche 4 auf, die über je einen Federbereich 5 mit dem Ruhebereich 3 verbunden sind und die gleich ausgestaltet sind wie die in den Figuren 7 und 8 dargestellten Resonatorbereiche 4.

Die in den Figuren 7, 8 und 9 dargestellten Antriebe sind alle mit mehreren, deckungsgleich angeordneten Antriebsblechen 1 realisiert, das heisst weisen geschnitten die in den Figuren 2d bis 2f dargestellten Formen auf.

Selbstverständlich ist es möglich, die Resonatoren eines erfindungsgemässen, piezoelektrischen Antriebes mit Merkmalen auszugestalten, die in verschiedenen Figuren, also nicht miteinander kombiniert, dargestellt sind.

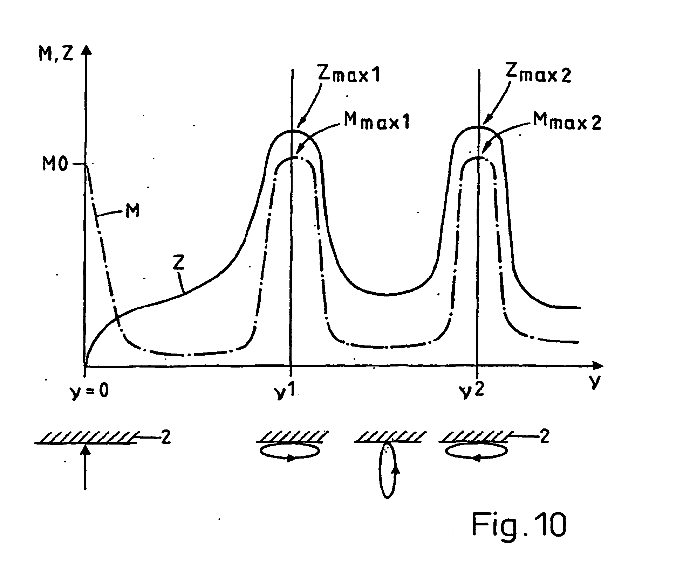

Figur 10 zeigt sehr schematisch eine Betriebskurve für einen erfindungsgemässen Antrieb. Darin sind als Funktion der Antriebsfrequenz ν das Drehmoment M und die Impedanz Z dargestellt. Derartige Betriebskurven können beispielsweise gemessen werden über eine Spannungsmessung direkt am Piezoelement (von der Speisung isolierter Messanschluss an der an der Speisespannung anliegenden Seite des Piezoelementes, siehe Figur 2f). Die Messungen können zur off-line Bestimmung der für eine gewünschte Bewegungsrichtung zu wählenden Frequenz dienen oder zur on-line Steuerung von Speisefrequenz und/oder Speisespannung. Unter der Betriebskurve sind die Schwingungen eines mit einem anzutreibenden Körper 2 in Kontakt stehenden Kontakt-Kantenbereichs eines Resonators angedeutet

In der dargestellten Betriebskurve sind zwei ausgezeichnete Frequenzen ν1 und ν2 sichtbar, für die entlang der Oberfläche des anzutreibenden Körpers ausgerichtete, elliptische Schwingungen mit einander entgegengesetzten Richtungen festgestellt werden. Die beiden Frequenzen ν1 und ν2 zeichnen sich aus durch maximales Drehmoment und maximale Impedanz. Bei der Frequenz ν = 0 (Stillstand) wird der Kontakt-Kantenbereich durch die Vorspannung des Federbereiches gegen den anzutreibenden Körper gedrückt (Haltemoment M0). Zwischen den beiden ausgezeichneten Frequenzen wird eine im wesentlichen quer zur Oberfläche des anzutreibenden Körpers 2ausgerichtete Schwingung festgestellt, die keine antreibende Wirkung hat, das Moment gegenüber dem Haltemoment aber relevant herabsetzt (Freilauf).

## Patentansprüche

1. Piezoelektrischer Antrieb zur Erzeugung einer Relativbewegung in einer Bewegungsebene zwischen einem ersten Körper und einem zweiten Körper, welcher Antrieb mindestens ein mit einer hochfrequenten Wechselspannung antreibbares Piezoelement
und einen an das Piezoelement mechanisch angekoppelten und durch das Piezoelement in einer stehenden Welle erregbaren Resonator (4) mit einem sich verjüngenden Horn (7) aufweist,
wobei der Resonator (4) mit dem ersten Körper verbunden ist und ein Bereich (8) des Horns gegen eine Oberfläche (10) des zweiten Körpers (2) pressbar ist, **dadurch gekennzeichnet,**
**dass** der Antrieb mindestens zwei deckungsgleiche und deckungsgleich angeordnete Antriebsbleche (1) aufweist, welche den ersten Körper bilden oder an diesem befestigt sind und parallel zur Bewegungsebene angeordnet sind,
wobei die Antriebsbleche (1) jeweils einen Ruhebereich (3) und mindestens einen Resonatorbereich (4) aufweisen, wobei zwischen Ruhebereich (3) und Resonatorbereich (4) ein parallel zur Ebene des Antriebsbleches (1) federnder Federbereich (5) angeordnet ist,
**dass** das Piezoelement (6) flach ist und auf beiden Seiten des Piezoelementes (6) oder der Piezoelemente (6) je ein Resonatorbereich (4) eines Antriebsbleches (1) angekoppelt ist
**dass** der zweite Körper (2) relativ zu den Antriebsblechen (1) derart positionierbar ist, dass jeweils der mindestens eine Resonatorbereich (4) mit einem Kontakt-Kantenbereich (8), der im Bereich des Horns liegt, durch eine Vorspannung des Federbereiches (5) gegen eine im wesentlichen quer zur Ebene des Antriebsbleches (1) ausgerichtete Oberfläche (10) des zweiten Körpers (2) gepresst wird, derart, dass dieser im wesentlichen parallel zu dieser Oberfläche (10) antreibbar ist.

2. Antrieb nach Anspruch 1, **dadurch gekennzeichnet, dass** das mindestens eine Piezoelement (6) flach und rechteckig und in einem 3.1-Modus anregbar ist, dass Längsachsen (A) von Piezoelement (6) und Resonatorbereich (4) übereinanderliegend angeordnet sind und dass das Horn (7) sich in dieser Längsrichtung erstreckt und dass der Koniakt-Kantenbereich (8) im wesentlichen parallel oder tangential zur Bewegungsrichtung ausgerichtet ist.

3. Antrieb nach Anspruch 2, **dadurch gekennzeichnet, dass** das Horn (7) des mindestens einen Resonatorbereichs (4) sich asymmetrisch zur Längsachse des Resonatorbereichs (4) verjüngt.

4. Antrieb nach Anspruch 1, **dadurch gekennzeichnet, dass** der Resonatorbereich (4) einen Hauptresonatorbereich (4.1) mit einem Piezoelement (6) und mindestens einen Sekundärresonatorbereich (4.2) ohne ein Piezoelement aufweist, welche Resonatorbereiche (4.1, 4.2) über eine Einschnürung miteinander verbunden sind.

5. Antrieb nach Anspruch 4, **dadurch gekennzeichnet, dass** der Sekundärresonator die Form eines Doppelhorns (13) mit einer Mulde (14) aufweist und dass der Kontakt-Kantenbereich (8) in der Mulde (14) angeordnet ist.

6. Antrieb nach Anspruch 1, **dadurch gekennzeichnet, dass** im Kontakt-Katenbereich (8) zwischen den beiden auf je einer Seite des Piezoelementes (6) angeordneten Resonatorbereichen (4) ein Distanzelement (8') angeordnet ist.

7. Antrieb nach einem der Ansprüche 1 bis 6, **dadurch gekennzeichnet, dass** die zu erzeugende Bewegung eine rotative Bewegung ist und dass der Ruhebereich (3) der Antriebsbleche (1) im wesentlichen ringförmig ist.

8. Antrieb nach Anspruch 7, **dadurch gekennzeichnet, dass** die Antriebsbleche (1) jeweils eine Mehrzahl von Resonatorbereichen (4) aufweisen und dass diese in regelmässigen Abständen voneinander und gegen innen oder aussen gerichtet an den Ruhebereich (3) anschliessen.

9. Antrieb nach einem der vorangehenden Ansprüche, **dadurch gekennzeichnet, dass** der Federbereich (5) ein schmaler Streifen ist, dessen Ausrichtung eine Komponente parallel zur Längsachsen (A) aufweist und der da in den Resonatorbereich (4) mündet, wo eine stehende Longitudinalwelle einen Wellenknoten aufweist.

10. Antrieb nach einem der Ansprüche 1 bis 9, **dadurch gekennzeichnet, dass** die Antriebsbleche (1) aus einem elektrisch leitenden Material bestehen, dass eine Mehrzahl von Piezoelementen (6) mit einem elektrisch leitenden Kleber auf die Resonatorbereiche (4) geklebt sind und dass die Antriebsbleche(1) im Ruhebereich (3) an die hochfrequente Wechselspannung oder an Erde angeschlossen sind.

## Claims

1. A piezo-electric drive for producing a relative movement in a movement plane between a first body and a second body, said drive comprising at least one piezo-element which may be driven with a high-frequency alternating voltage,
and a resonator (4) with a tapering horn (7), said resonator being mechanically coupled to the piezoelement and able to be excited by the piezo-element in a standing wave,
wherein the resonator (4) is connected to the first body and a region (8) of the horn can be pressed against a surface (10) of the second body (2), **characterised in**
**that** the drive comprises at least two congruent drive plates (1) in congruent arrangement, which form the first body or are fastened to this and which are arranged parallel to the movement plane,
wherein each drive plate (1) comprises a rest region (3) and at least one resonator region (4), wherein between the rest region (3) and the resonator region (4) there is arranged a spring region (5) resilient parallel to the plane of the drive plate (1);
**that** the piezo-element (6) is flat and on both sides of the piezo-element, or of the piezo-elements, a resonator region (4) of a drive plate (1) is coupled to it;
**that** the second body (2) may be positioned relative to the drive plate (1) in a manner such that the at least one resonator region (4) with a contact edge region (8) lying in the region of the horn is pressed by way of a pretension of the spring region (5) against a surface (10) of the second body (2), which surface (10) is aligned essentially transverse to the plane of the drive plate (1), in a manner such that this second body is drivable essentially parallel to said surface (10).

2. A drive according to claim 1, **characterised in that** the at least one piezoelement (6) is flat and rectangular and can be excited in a 3,1 mode,
that the longitudinal axes (A) of the piezo-element (6) and the resonator region (4) are arranged lying on top of each other, and that the horn (7) extends in this longitudinal direction, and that the contact edge region (8) is aligned essentially parallel or tangentially to the movement direction.

3. A drive according to claim 2, **characterised in that** the horn (7) of the at least one resonator region (4) tapers asymmetrically to the longitudinal axis of the resonator region (4).

4. A drive according to claim 1, **characterised in that** the resonator region (4) comprises a main resonator region (4.1) with a piezo-element (6) and at least one secondary resonator region (4.2) without a piezo-element, which resonator regions (4.1, 4.2) are connected via a constriction.

5. A drive according to claim 4, **characterised in that** the secondary resonator has the shape of a double horn (13) with a trough (14) and that the contact edge region (8) is arranged in the trough (14).

6. A drive according to claim 1, **characterised in that** a distance element (8') is arranged in the contact edge region (8) between the two resonator regions (4), which are situated one on each side of the piezo-element (6).

7. A drive according to one of the claims 1 to 6, **characterised in that** the movement to be generated is a rotational movement and that the rest region (3) of the drive plates (1) is essentially annular.

8. A drive according to claim 7, **characterised in that** the drive plates (1) each comprise a plurality of resonator regions (4) and that these adjoin the rest region (3) at a regular distance from each other and directed inwards or outwards.

9. A drive according to one of the preceding claims, **characterised in that** the spring region (5) is a narrow strip whose alignment comprises a component parallel to longitudinal axes (A) and which opens into the resonator region (4) at the point where a standing longitudinal wave comprises a wave node.

10. A drive according to one of the claims 1 to 10, **characterised in that** the drive plates (1) consist of an electrically conducting material, that a plurality of piezo-elements (6) are affixed to the resonator regions (4) by an electrically conducting adhesive, and that the drive plates (1) in the rest region (3) are connected to the high-frequency alternating voltage or to ground.

## Revendications

1. Entraînement piézoélectrique destiné à amener un déplacement relatif dans un plan de déplacement entre un premier corps et un deuxième corps, lequel entraînement présente
au moins un piézoélément qui peut être entraîné par une tension alternative à haute fréquence et
un résonateur (4) accouplé mécaniquement au piézoélément, apte à être excité par le piézoélément en une onde stationnaire et présentant une corne (7) qui se rétrécit,
le résonateur (4) étant relié au premier corps et une partie (8) de la corne pouvant être repoussée contre une surface (10) du deuxième corps (2),
**caractérisé en ce que**
l'entraînement présente au moins deux plaques d'entraînement (1) qui se recouvrent et sont disposées de manière à se recouvrir, qui forment le premier corps ou sont fixées à ce dernier et qui sont disposées parallèlement au plan de déplacement,
**en ce que** les plaques d'entraînement (1) présentent chacune une partie au repos (3) et au moins une partie de résonateur (4), une partie élastique (5) parallèle au plan de la plaque d'entraînement (1) étant disposée entre la partie au repos (3) et la partie de résonateur (4),
**en ce que** le piézoélément (6) est plat et **en ce qu'**une partie de résonateur (4) d'une plaque d'entraînement (1) est accouplée à chacun des deux côtés du piézoélément (6) ou des piézoéléments (6),
**en ce que** le deuxième corps (2) peut être placé par rapport aux plaques d'entraînement (1) de telle sorte que la ou les parties de résonateur (4) soient toutes comprimées par une partie (8) de bord de contact située dans la partie occupée par la corne par application d'une précontrainte de la partie élastique (5) contre une surface (10) du deuxième corps (2) orientée essentiellement transversalement par rapport au plan de la plaque d'entraînement (1), de telle sorte que ce dernier puisse être entraîné essentiellement en parallèle à cette surface (10).

2. Entraînement selon la revendication 1, **caractérisé en ce que** le ou les piézoéléments (6) sont plats et rectangulaires et peuvent être excités en mode 3.1, **en ce que** les axes longitudinaux (A) du piézoélément (6) et de la partie de résonateur (4) sont disposés l'un au-dessus de l'autre, **en ce que** la corne (7) s'étend dans cette direction longitudinale et **en ce que** la partie (8) de bord de contact est orientée essentiellement en parallèle ou tangentiellement par rapport à la direction du déplacement.

3. Entraînement selon la revendication 2, **caractérisé en ce que** la corne (7) de la ou des parties de résonateur (4) se rétrécit asymétriquement par rapport à l'axe longitudinal de la partie de résonateur (4).

4. Entraînement selon la revendication 1, **caractérisé en ce que** la partie de résonateur (4) présente une partie principale de résonateur (4.1) dotée d'un piézoélément (6) et au moins une partie secondaire de résonateur (4.2) sans piézoélément et **en ce que** les parties de résonateur (4.1, 4.2) sont reliées l'une à l'autre par un rétrécissement.

5. Entraînement selon la revendication 4, **caractérisé en ce que** le résonateur secondaire présente la forme d'une double corne (13) dotée d'une gorge (14) et **en ce que** la partie (8) de bord de contact est disposée dans la gorge (14).

6. Entraînement selon la revendication 1, **caractérisé en ce qu'**un élément d'écartement (8') est disposé dans la partie (8) de bord de contact entre les deux parties de résonateur (4) disposées chacune sur un côté du piézoélément (6).

7. Entraînement selon l'une des revendications 1 à 6, **caractérisé en ce que** le déplacement à amener est un déplacement rotatif et **en ce que** la partie au repos (3) de la plaque d'entraînement (1) a une forme essentiellement annulaire.

8. Entraînement selon la revendication 7, **caractérisé en ce que** chacune des plaques d'entraînement (1) présente plusieurs parties de résonateur (4) et **en ce que** ces dernières sont raccordées à la partie au repos (3) à distances régulières les unes des autres et sont orientées vers l'intérieur ou vers l'extérieur.

9. Entraînement selon l'une des revendications précédentes, **caractérisé en ce que** la partie élastique (5) est un étroit ruban dont l'orientation présente une composante parallèle à l'axe longitudinal (A) et qui débouche dans la partie de résonateur (4) là où une onde longitudinale stationnaire présente un noeud de vibration.

10. Entraînement selon l'une des revendications 1 à 9, **caractérisé en ce que** les plaques d'entraînement (1) sont constituées d'un matériau électriquement conducteur, **en ce que** plusieurs piézoéléments (6) sont collés à l'aide d'un adhésif électriquement conducteur sur les parties de résonateur (4) et **en ce que** les plaques d'entraînement (1) sont raccordées à la tension alternative à haute fréquence ou à la terre dans la partie au repos (3).
